Europäisches Patentamt

European Patent Office

Office européen des brevets

(19)

(11) Veröffentlichungsnummer: **0 184 664**
A1

# (12) EUROPÄISCHE PATENTANMELDUNG

(21) Anmeldenummer: 85114104.4

(22) Anmeldetag: 06.11.85

(51) Int. Cl.⁴: **F 16 C 37/00**, F 16 C 25/08, F 16 C 21/00, G 05 G 5/20

(30) Priorität: 10.11.84 DE 3441212

(43) Veröffentlichungstag der Anmeldung: 18.06.86 Patentblatt 86/25

(84) Benannte Vertragsstaaten: BE CH FR GB IT LI NL

(71) Anmelder: Max-Planck-Gesellschaft zur Förderung der Wissenschaften e.V., Bunsenstrasse 10, D-3400 Göttingen (DE)

(72) Erfinder: Lemke, Dietrich, Prof. Dr., Am Gutleuthofhang 20a, D-6900 Heidelberg-Schlierbach (DE)
Erfinder: Martin, Wilhelm, Dr., Claszeile 81, D-1000 Berlin 37 (DE)
Erfinder: Bauer, Horst, Vordergasse 7, D-6945 Hirschberg (DE)

(74) Vertreter: Landsmann, Ralf, Dipl.-Ing., Kleeweg 3, D-7990 Friedrichshafen 1 (DE)

(54) **Einrichtung zur Wärmeableitung von rotierenden Bauteilen in Raumfluggeräten.**

(57) Zur Wärmeableitung werden kugelgelagerte Bauteile (2, 4) in Raumfluggeräten zusätzlich mit einer Spitzenlagerung (18) versehen.

EP 0 184 664 A1

0184664

DORNIER SYSTEM GMBH

7990 Friedrichshafen


Reg. S 492 EU


Einrichtung zur Wärmeableitung von rotierenden Bauteilen
in Raumfluggeräten


Die Erfindung betrifft eine Einrichtung zur Wärmeableitung
der Wärme von kugelgelagerten Achsen oder Wellen wie z.B.
von Filterrädern oder Blendenrädern, die in Raumfluggeräten verwendet werden.

Aus der DE-PS 24 08 263, "Vakuum Technik" Heft 6, Sept. 1973
Seiten 169 - 177 und "Journal of Spacecraft and Rockets"
Vol. 4 No. 1, Jan. 1967 Seiten 119 - 122 ist es bekannt, zum
thermischen Entkoppeln benachbarter Maschinenelemente Wälzlager zu verwenden, da über den Walzkörper nur ein Bruchteil
der Wärmemenge von einem Wälzlagerring zum anderen fliessen
kann. Dies ist jedoch immer dann nachteilig, wenn ein rotierendes Bauteil zur Sicherstellung der Drehfunktion in Wälzlagern gelagert werden muß und bei Erwärmung seine Wärme
abfliessen muß.

Es könnte nun daran gedacht werden, ohne dass es druckschriftlich belegbar ist, mittels Schleifern am Bauteil die Wärme abzunehmen und abzuführen. Dadurch würde sich jedoch ein erhöhtes zusätzliches Reibmoment ergeben, das durch eine höhere Antriebsleitung ausgeglichen werden müsste.

Aufgabe der Erfindung ist es, kugelgelagerte Achsen und Wellen z.B. von Filterrädern oder Blendenrädern in Raumfluggeräten ausreichend zu kühlen und für besondere Anwendungsfälle eine spielfreie Lagerung eines Bauteils zu schaffen.

Diese Aufgabe wird erfindungsgemäß dadurch gelöst, dass an mindestens einem Achsenende im Bereich der Drehachse eine Spitzenlagerung vorgesehen ist. Weitere Ausgestaltungen der Erfindung sind in den Unteransprüchen angegeben.

Durch die nach Art einer Spitzenlagerung gestaltete Einrichtung zur Wärmeabfuhr werden die Abkühlzeiten der Bauteile erheblich verringert. Die Spitzenlagerung nimmt dabei keine Lagerkräfte auf, sondern dient der Kühlung. Die Spitzenlagerung kann durch einstellbare Federkraft gleichzeitig dazu benutzt werden, die Lagerung unter Vorspannung zu setzen, so dass unter Weltraumbedingungen eine spielfreie Lagerung zur Verfügung steht. Spitzen haben bei korrekter Zentrierung auf die mathematische Drehachse einen verschwindenden Reibungsverlust. Lösungen mit Schleifern oder Bürsten würden die Achse umso stärker abbremsen, je weiter entfernt ihr Ansatz von der mathematischen Drehachse ist.

Die Erfindung wird nachfolgend anhand von Figuren näher erläutert.

Es zeigen:

Figur 1  eine prinzipielle Darstellung der erfindungsgemässen Lagerung,

Figur 2  eine Platine mit Lagerspitze,

Figur 3  eine vergrösserte Darstellung der Spitzenlagerung.

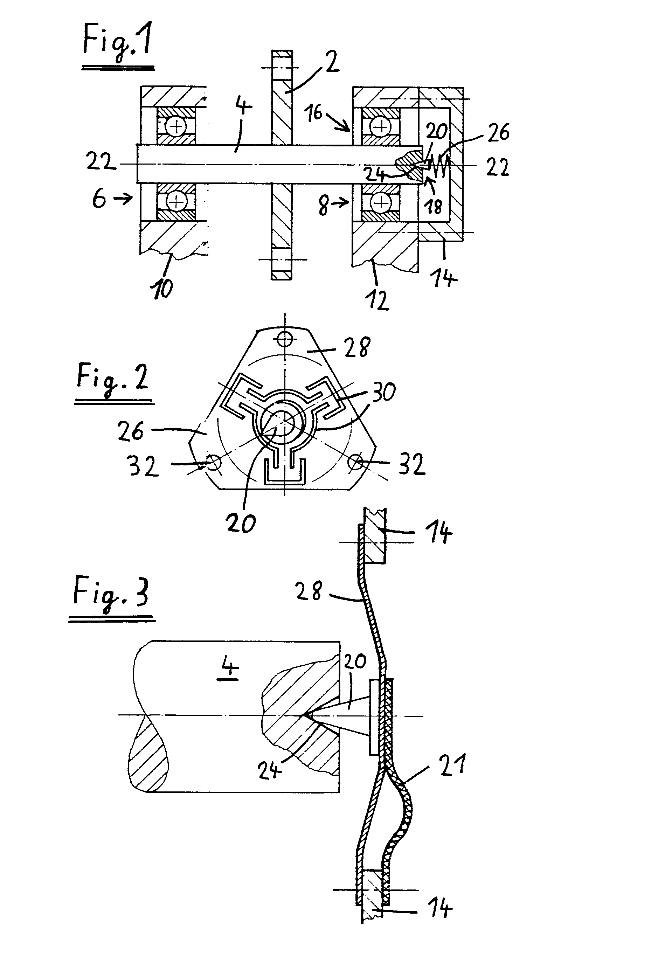

Figur 1 zeigt den prinzipiellen Aufbau der Lagerung eines Blendenrads 2 in einem Raumfluggerät. Das Blendenrad befindet sich auf einer Achse 4, die mittels zweier Kugellager 6, 8 in einem Gehäuse gelagert ist, von dem in Figur 1 die Wandungsteile 10, 12, 14 dargestellt sind. Die Lagerkräfte und insbesondere die Beschleunigungskräfte bei Bodentest, Start und Landung werden vollständig von den Kugellagern 6, 8 aufgenommen. An einem Ende 16 weist die Achse 4 eine Spitzenlagerung 18 auf, die sich prinzipiell an dem Wandungsteil 14 abstützt und deren Lagerspitze 20 im Bereich der Drehachse 22-22 in eine Ausnehmung 24 der Achse 4 eindringt. Die Lagerspitze 20 ist gegenüber dem Wandungsteil 14

- 4 -

0184664

mittels Federelement 26 abgestützt.

Figur 2 zeigt ein solches Federelement 26 von Figur 1, das beispielsweise eine Platine 28 sein kann. Die Platine, die aus federndem Material besteht, weist Ausnehmungen 30 zur Erhöhung der Federeigenschaften und Bohrungen 32 für die Befestigung am Wandungsteil 14 auf. Im Zentrum der Platine ist eine Lagerspitze 20 befestigt, die aus Cu, Cu-Be, Saphir oder einem anderen geeigneten Material bestehen kann. Wesentlich für die Materialauswahl der Spitze sind nicht nur die sonst bei Spitzenlagerungen verlangten Tragfähigkeitseigenschaften oder Verschleißeigenschaften, sondern vor allem die Wärmeleitfähigkeit, da die Spitzenlagerung erfindungsgemäß vor allem der Wärmeableitung von Achse 4 zum Wandungsteil 14 dient, weil der Wärmefluss über die Kugellager 6, 8 zum Gehäuse nicht ausreichend ist.

Die Spitze 20 der Spitzenlagerung 18 übt auf die Achse 4 mittels der Feder 26 eine Vorspannkraft aus, die von einem der Kugellager 6, 8 aufgenommen wird, so dass sich auch unter 0-g-Bedingungen eine genau definierte axiale Lagerung des Blendenrads 2 ergibt.

Figur 3 zeigt eine Schnittdarstellung einer am Wandungsteil 14 befestigten Platine 28, die eine Lagerspitze 20 trägt. Die Lagerspitze dringt in eine Ausnehmung 24 der Achse 4 ein. Die Geometrie von Lagerspitze 20 und Ausnehmung 24 richtet sich nach thermischen Gesichtspunkten. Je nach Anwendungsfall kann der Kegelwinkel von Lagerspitze und Ausnehmung unterschiedlich gewählt werden. Im Bedarfsfall kann an Stelle der Spitze auch eine Kugel vorhanden sein, die in einen Kegel oder eine Kugelkalotte eingreift.

Zur Verbesserung der Wärmeableitung ist die Spitze 20 hier mit einer Litze oder einem Band 21 aus sehr reinem Kupfer verbunden, dessen anderes Ende am Gehäuse 14 befestigt ist. Dies bringt den Vorteil, dass für jede Aufgabe (Federungseigenschaften und Wärmeleitfähigkeit) ein eigenes Bauteil vorhanden ist.

0184664

DORNIER SYSTEM GMBH

7990 Friedrichshafen

Reg. S 492

P a t e n t a n s p r ü c h e :

1. Einrichtung zur Wärmeableitung der Wärme von kugelgelagerten Wellen oder Achsen bei Filterrädern, Blendenrädern oder dergleichen, insbesondere für Raumfahrtanwendungen, d a d u r c h   g e k e n n z e i c h -
   n e t,  dass an mindestens einem Achsenende (16) im
   Bereich der Drehachse (22-22) eine Spitzenlagerung (18)
   vorgesehen ist.

2. Einrichtung nach Anspruch 1, dadurch gekennzeichnet,
   dass die Spitzenlagerung auf das Bauteil eine Vorspannung ausübt.

3. Einrichtung nach einem der Ansprüche 1 oder 2, dadurch
   gekennzeichnet, dass die Lagerspitze (20) des Spitzenlagers (18) aus Cu besteht.

4. Einrichtung nach einem der Ansprüche 1 oder 2, dadurch gekennzeichnet, dass die Lagerspitze (20) aus Cu-Be besteht.

5. Einrichtung nach einem der Ansprüche 1 oder 2, dadurch gekennzeichnet, dass die Lagerspitze (20) aus Saphir oder einem anderen Nichtleiter besteht, so dass Achse (4) und Wandungsteil (14) elektrisch isoliert sind.

6. Einrichtung nach einem der vorhergehenden Ansprüche, dadurch gekennzeichnet, dass die Lagerspitze (20) mittels einer Feder (26) oder einer federnden Platine (28) in eine kegelförmige, pfannenförmige oder kugelkalottenförmige Ausnehmung (24) der Achse (4) eindringt.

7. Einrichtung nach einem der vorhergehenden Ansprüche, dadurch gekennzeichnet, dass die Lagerspitze (20) und das Gehäuse (14) mittels eines Bandes (21) aus gut wärmeleitendem Material verbunden sind.

Ka/Sz

Fig.1

Fig.2

Fig.3

0184664

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-2 831 995 (AGULE) <br> * Spalte 1, Zeilen 34-37; Spalte 2, Zeilen 28-60; Figur 1 * | 1,2,6 | F 16 C 37/00 <br> F 16 C 25/08 <br> F 16 C 21/00 <br> G 05 G 5/20 |
| X | US-A-3 699 373 (HOLLAND) <br> * Spalte 4; Figuren 1,2,5 * | 1-3,6 | |
| A | US-A-1 331 113 (LEE) <br> * Insgesamt * | 5 | |
| A | US-A-2 391 670 (BAY) <br> * Insgesamt * | 7 | |
| A | GB-A- 768 084 (G.R.) | | |
| A | US-A-2 300 362 (SHOTTER) | | RECHERCHIERTE SACHGEBIETE (Int. Cl.4) <br><br> F 16 C <br> B 64 G <br> G 05 G <br> H 01 J |

Der vorliegende Recherchenbericht wurde für alle Patentansprüche erstellt

| Recherchenort <br> DEN HAAG | Abschlußdatum der Recherche <br> 06-02-1986 | Prüfer <br> ORTHLIEB CH.E. |
|---|---|---|